# FASCICULE DE BREVET EUROPEEN

(11) **EP 1 684 541 B1**
(45) Date de publication et mention de la délivrance du brevet: **18.06.2014**
(21) Numéro de dépôt: 06300023.6
(22) Date de dépôt: 11.01.2006
(51) Int. Cl.: H04W 4/06, H04W 4/18

(54) **Procédé d'émission de données par un dispositif membre d'un groupe d'appel**
Verfahren zur Datenübertragung von einem Teilnehmer in einem Gruppenkommunikationsnetzwerk
Method for data transmission by a member of a group call

(30) Priorité: 24.01.2005 FR 0550197
(43) Date de publication de la demande: 26.07.2006
(73) Titulaire: Sierra Wireless SA, 92442 Issy les Moulineaux Cedex (FR)
(72) Inventeur: Hewco, Eric, 91530 Saint Cheron (FR); Dumont, Jérémie, 75015 Paris (FR)
(74) Mandataire: Schmit, Christian Norbert Marie

(56) Documents cités:
- WO-A-99/60757
- DE-A1- 4 011 648
- US-A- 5 809 018
- US-B1- 6 477 150
- PATENT ABSTRACTS OF JAPAN vol. 1998, no. 09, 31 juillet 1998 (1998-07-31) & JP 10 093524 A (NEC SHIZUOKA LTD; NEC CORP), 10 avril 1998 (1998-04-10)
- ETSI: "Digital cellular telecommunications system (Phase 2+); Mobile radio interface layer 3 specification (3GPP TS 04.08 version 7.20.1 Release 1998)" ETSI TS 100 940 V7.20.1 (2003-09), 30 septembre 2003 (2003-09-30), page 1-29,297-301, XP002348151 France

## Description

L'invention a pour objet un procédé d'émission de données par un dispositif membre d'un groupe d'appel. Le domaine de l'invention est celui de la téléphonie mobile. Plus précisément le domaine de l'invention est celui des appels de groupe, ce domaine plus précis étant lui-même adapté à un usage par des services administratifs de type police, et/ou secours d'urgences, la liste n'étant pas exhaustive.

Un but de l'invention est de permettre une transmission en temps réelle de données non vocales lors d'un appel de groupe. Dans l'invention temps réel signifie en moins d'une seconde, et quoiqu'il en soit plus rapidement que la transmission d'un message court (SMS).

Dans l'état de la technique on connaît les groupes d'appel. Un groupe d'appel est constitué par un ensemble de. Un terminal est, par exemple, un téléphone mobile connecté à un réseau de téléphonie mobile via une station de base. Dans un groupe d'appel chaque terminal peut tenir deux rôles : parleur ou écouteur. A un instant donné dans un groupe il n'y a qu'un parleur. Le parleur émet des données vocales qui sont diffusées pour être reçues par tous les écouteurs du groupe.

Dans un groupe d'appel il peut exister au moins 1 dispositif répartiteur doté de capacités étendues par rapport à un terminal standard ou tout simplement étant le terminal d'un utilisateur ayant un statut particulier parmi les utilisateurs du groupe d'appel.

Pour une cellule donnée du réseau de téléphonie, tous les terminaux écouteurs appartenant à un même groupe d'appel utilise la même ressource radio, c'est à dire le même canal de communication pour recevoir les données vocales émises par le parleur.

Certaines applications, notamment dans le domaine du maintien de l'ordre et des secours d'urgence, requièrent de pourvoir émettre des données non vocales à tout moment et dans un délai très court. A tout moment signifie en particulier y compris pendant que l'utilisateur est en train d'émettre ou de recevoir un appel via un des groupes d'appel auquel il s'est enregistré.

Une autre obligation dans ces domaines est de pouvoir identifier la personne ou le terminal qui est le parleur. Pour ce faire il faut donc que le parleur transmette un identifiant.

Dans l'état de la technique, la seule solution possible pour émettre un tel message non vocal est l'émission d'un SMS. Cependant émettre un SMS prend au minimum pendant plusieurs secondes. Le recours au SMS n'est donc pas envisageable.

L'état de la technique comporte aussi le document US-B1-6 4777 150. On résout ce problème si le terminal a le rôle d'écouteur, alors il demande une ressource en émission d'un deuxième groupe et réintègre le premier groupe.

Dans une variante, pour les terminaux ayant le rôle de parleur, on résout aussi ce problème en multiplexant les données vocales avec les données non vocales à transmettre. Le principe de l'invention est d'utiliser pour la transmission des données vocales un premier codec en faisant croire au réseau qu'un deuxième codec est utilisée, le débit du premier codec étant inférieur au débit du deuxième codec. Cela a pour effet de libérer de la place dans les trames émises selon le deuxième codec. Cette place libérée est utilisée pour transmettre des données non vocales. Dans l'invention les données non vocales transmises comportent un identifiant de trame permettant de reconstituer les données non vocales transmises. Il est en effet probable qu'il faille plusieurs trames pour transmettre les données non vocales.

Un codec est un dispositif électronique, ou un programme, qui convertit un signal analogique ou numérique audio ou vidéo en un signal codé numériquement, au moment de l'émission, et qui peut effectuer l'opération inverse à la réception. Le terme codec est une contraction de codeur - décodeur.

Dans les mêmes groupes d'appel on résout ce problème pour les terminaux ayant le rôle d'écouteur en faisant effectuer un changement de groupe temporaire au terminal qui a des données non vocales à émettre. Dans ce nouveau groupe le terminal effectue une demande de ressource pour émettre des données, et une fois la ressource obtenue le terminal émet les données. A la fin de l'émission, le terminal réintègre son groupe d'appel d'origine. Le début d'émission des données se fait en environ 500 ms 300ms dans les cas les plus favorables, si le second groupe est établit en permanence et la ressource libre au moment de la demande.

La présente invention est définie par l'objet de la revendication indépendante 1.

L'invention sera mieux comprise à la lecture de la description qui suit et à l'examen des figures qui l'accompagnent. Celles ci sont présentées à titre indicatif et nullement limitatif de l'invention. Les figures montrent :
- Figure 1 : une illustration sommaire d'un groupe d'appel.
- Figure 2 : une illustration d'étape générique du procédé selon l'invention.
- Figure 3 : une illustration d'étapes du procédé selon l'invention pour le multiplexage des données vocales et non vocales.

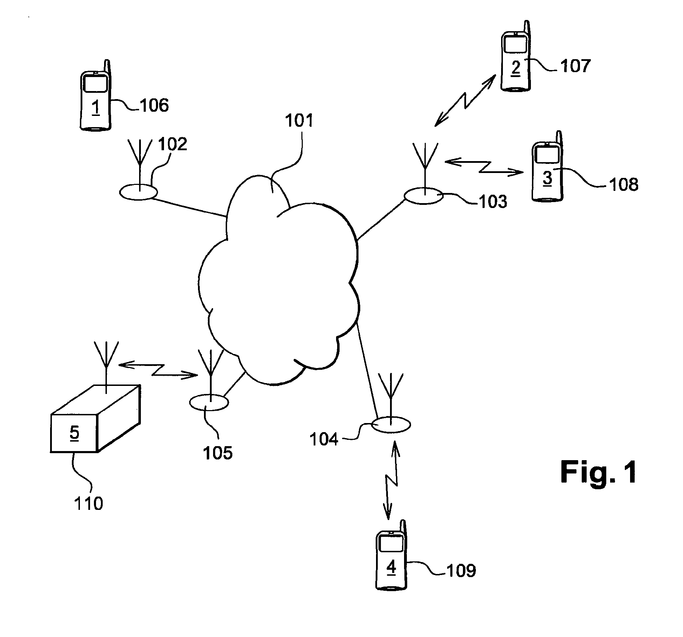

La figure 1 montre un réseau 101 de télécommunications supportant les appels de groupe. Un tel réseau est par exemple un réseau GSM. Le réseau 101 comporte un certain nombre de stations de base, par exemple les stations de base 102 à 105. A ces stations de base sont connectés de terminaux, ici des téléphones mobiles. La figure 1 montre un terminal 106 connecté à la station 102 de base, des terminaux 107 et 108 connectés à la station 103 de base, un terminal 109 connecté à la station 104 de base, et un répartiteur 110 connecté à la station 105 de base ou directement au réseau 101.

Dans l'exemple de la description le réseau 101 est un réseau GSM, mais dans la pratique l'invention s'applique à tous les réseaux de génération supérieure ou égale à 2, et plus généralement à tous les réseaux supportant les appels de groupe.

Les dispositifs 106 à 110 sont tous en communication dans un même premier groupe d'appel identifié par un identifiant Gid1 de groupe d'appel. La particularité d'un groupe d'appel est que pour une station de base donnée, tous les terminaux et dispositif écouteurs d'un même groupe d'appel partagent la même ressource radio.

Un répartiteur est un dispositif ayant un rôle particulier dans le groupe d'appel. Un répartiteur est soit utilisé par un utilisateur chargé de coordonner les actions des membres du groupe d'appel, soit un répartiteur est connecté à une salle de centralisation comme un PC routier ou un commissariat par exemple.

Considérons le téléphone 106 et son utilisateur. Dans la pratique lorsque l'on prête une action a un dispositif, celle-ci est effectuée par un microprocesseur dudit dispositif commandé par des codes instructions d'une mémoire de programme dudit dispositif. Dans un souci de clarté les microprocesseurs et mémoires ne sont pas représentés pour les dispositifs impliqués dans cette description.

Le téléphone 106 est actif dans un premier groupe d'appel géré par le réseau 101.

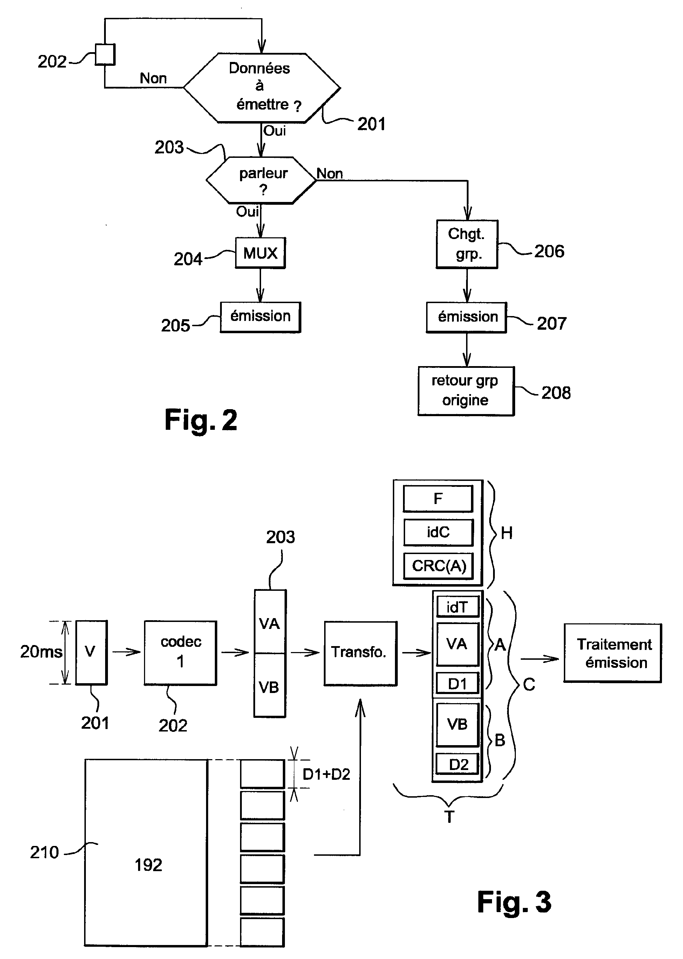

La figure 2 montre une étape 201 de test d'existence de données à émettre réalisée à intervalle régulier par un terminal selon l'invention. L'étape 201 peut aussi être provoqué par une interruption matérielle adressée au microprocesseur du téléphone 106 suite à une action de l'utilisateur.

Dans un exemple on considère que le téléphone 106, selon l'invention, comporte une mémoire de données à émettre dans laquelle le processeur du téléphone 106 enregistre des données non vocales qui doivent être émises. La mémoire de données est soit remplie à intervalles réguliers si les données doivent être émises à intervalles réguliers, soit elle est remplie suite à une action de l'utilisateur du téléphone 106. Une telle action est par exemple la validation d'une option d'un menu d'une interface homme machine du téléphone 106. La sélection de cette option a pour effet d'écrire les données à transmettre dans la mémoire de données.

Si la mémoire de données est vide, c'est-à-dire s'il n'y a pas de données à transmettre, alors on passe de l'étape 201 à des étapes 202 correspondant aux activités normales du téléphone 106. Sinon on passe de l'étape 201 à une étape 203 de détermination du rôle du téléphone 106 dans le groupe d'appel.

Le téléphone 106 est soit parleur, soir écouteur. Il est parleur si son utilisateur a demandé, via un bouton d'alternat, et obtenu la parole dans le groupe d'appel auquel il appartient. Obtenir la parole signifie, dans un groupe d'appel, obtenir les ressources permettant d'émettre des données vocales qui sont alors reçues par tous les autres membres du groupe d'appel. Si un téléphone du groupe d'appel n'est pas parleur, alors il est écouteur.

Si le téléphone 106 est parleur alors il passe de l'étape 203 à une étape 204 de multiplexage des données à émettre avec des données vocales. Sinon le téléphone 106 passe à une étape 206 de changement de groupe d'appel.

Dans certaine application, il est requis que le téléphone qui est le parleur s'identifie et donc transmette son identifiant. Dans ce cas à intervalle régulier le téléphone 106 écrit dans sa mémoire de données son identifiant. Classiquement un tel identifiant est codé par 24 octets, c'est-à-dire 192 bits.

Dans une autre application, compatible avec la précédente, l'utilisateur du téléphone 106 doit ponctuellement émettre un message de statut. Dans ce cas l'utilisateur sélectionne le message de statut à émettre dans un menu, ce qui a pour effet de provoquer l'écriture dans la mémoire de données de l'identifiant du téléphone 106 et du code du message de statut. Un identifiant est classiquement codé par 24 octets, et un message de statut par 2 octets, soit un total de 208 bits.

La figure 2 illustre l'étape 204. La figure 2 montre un message 201 de voix. Un tel message est en fait une séquence ordonnée de bits correspondant à 20ms de son capté par un microphone du téléphone 106. Le message 201 est traité par un premier codec. Ce traitement est réalisé soit par un circuit spécialisé, soit par le microprocesseur du téléphone 106 commandé par des codes instructions spécifiques et correspondant au premier codec. Le résultat du traitement du message 201 par le codec 202 est un message 203 codé.

Dans un exemple le codec 202 est le codec AMR (Adaptative Multi Rate, pour débit adaptatif multiple) ayant un débit de 4.75kbit/s. Le message 203 codé est donc un message de 95 bits comportant lui-méme deux messages : un message VA comportant 42 bits dits de classe A, et un message VB de 53 bits dits de classe B. Les bits de classe A sont considérés comme plus importants que les bits de classe B est sont donc protégés par un code correcteur d'erreur présent dans l'entête d'une trame AMR. Dans la pratique ce code correcteur d'erreur est un CRC (somme de contrôle) de 8 bits.

Le message 203 est ensuite traité par un algorithme 204 de transformation selon l'invention. L'algorithme 204 produit une trame T selon un deuxième codec, ce deuxième codec étant dans un exemple le codec AMR ayant un débit de 6.7kbit/s. Dans tous les cas le débit du deuxième codec est supérieur au débit du premier codec.

La trame T produite comporte un entête H et un corps C. Le corps C est divisé en deux messages A et B. Le message A comporte 58 bits dits de classe A, et 76 bits dits de classe B. Dans l'invention le message A comporte les bits du message VA, un identifiant idT de trame et un message D1 de données. Le message B comporte le message VB et un message D2 de données.

Dans une mise en oeuvre de l'invention l'identifiant idT est codé sur 7 bits, le message D1 comportant alors 9 bits. Le message D2 comporte 23 bits.

L'identifiant idT est, par exemple, un compteur cyclique augmentant à chaque trame émise. Cyclique signifie ici qu'il revient à zéro lorsqu'il atteint la valeur maximale autorisée par sa dynamique. Dans une variante la valeur de l'identifiant idT est fonction de la nature des données émises via les messages D1 et D2.

Dans notre exemple les messages D1 et D2 permettent de transmettre jusqu'à 32 bits dans une trame AMR. Ces bits sont lus dans la mémoire 210 de données du téléphone 106. Si la mémoire 210 comporte plus de 32 bits, par exemple N = 192, alors ces N bits sont divisés en paquets de 32 bits qui sont transmis dans des trames successives identifiées via l'identifiant idT.

L'entête H comporte un CRC servant à protéger le message A, un champ idC identifiant le codec utilisé pour les données du corps C, et un drapeau F indiquant aux éléments d'infrastructures acheminant la trame T qu'il ne faut pas effectuer de traitement sur le contenu du corps C. Dans la mise en oeuvre décrite de l'invention le champ idC identifie le codec AMR à 6.7kbit/s.

La trame T une fois produite est traitée et émise, dans une étape 205 suivant l'étape 204, comme une trame de voix normale dans un groupe d'appel. A la réception de la trame T les dispositifs écouteurs effectuent les opérations de vérification des données classiques dans un groupe d'appel, puis recomposent le message 203 pour obtenir les données vocales à diffuser de manière acoustique. Les dispositifs écouteurs récupèrent aussi les messages D1 et D2 pour reconstituer les données non vocales émises par le dispositif parleur. L'invention est donc basée sur le principe que les dispositifs du groupe d'appel connaissent la structure modifiée selon l'invention des trames de voix échangées dans le groupe d'appel.

Dans l'invention la structure décrite pour la trame T est conservée même si le dispositif parleur n'a pas de données non vocales à transmettre. Dans ce cas les messages D1 et D2 sont vides. Dans ce cas, par exemple, on utilise une valeur d'identifiant de trame prédéterminée correspondant à une trame ne comportant pas de données non vocales dans les messages D1 et D2. Il devient donc inutile de traiter le contenu des messages D1 et D2 à la réception des trames de voix.

Dans l'étape 206 le téléphone 106 est écouteur dans le premier groupe d'appel. Cependant son utilisateur souhaite émettre des données non vocales. Dans l'étape 206, le terminal 106 change alors de groupe d'appel. Dans les données de signalisation fournies par le réseau 101 le terminal a lu un identifiant d'un deuxième groupe d'appel. L'utilisateur souhaitant émettre des données non vocales, celles-ci ayant été écrites dans la mémoire de données, le terminal active alors le deuxième groupe d'appel

Le deuxième groupe d'appel comporte au moins un dispositif destinataire privilégié des données non vocales émises par le téléphone 106. Dans notre exemple ce destinataire privilégié est le répartiteur 110.

Dans ce deuxième groupe d'appel le téléphone 106 demande les ressources en émission lui permettant d'émettre ses données non vocales. Par exemple il demande à devenir parleur. Ces ressources obtenues, le téléphone 106 émet les données non vocales dans une étape 207, puis réintègre le premier groupe d'appel dans une étape 208 suivant l'étape 207.

L'étape 207 correspond aux étapes 204 et 205. L'étape 207 se différencie par le fait que les messages VA et VB sont vides. En d'autres termes le téléphone 106 émet des trames selon des premier et deuxième codec, le deuxième codec ayant un débit supérieur au premier codec, une trame selon le deuxième codec comportant plus de bits qu'une trame selon le premier codec, les trames émises par le dispositif écouteur étant émises selon le deuxième codec mais en utilisant que les bits en surplus par rapport à la capacité du premier codec.

Dans une variante, comme il n'y a pas de données vocales à transmettre, le téléphone 106 utilise la totalité des bits des messages A et B pour transmettre les données non vocales. Cela permet de transmettre un message en paquets de 134 bits au lieu de paquets de 32 bits. Dans cette variante il n'y a donc pas de multiplexage entre des données vocales et des données non vocales.

Dans le deuxième groupe, seul un dispositif, par exemple le répartiteur, réagit à l'émission de données par le téléphone 106. Les autres dispositifs éventuellement inscrits dans ce deuxième groupe ne sont pas avertis de l'activité du téléphone 106 dans le deuxième groupe, ou s'ils le sont, ils n'en tiennent pas compte.

Dans cette description on désigne par données non vocales une information numérique transmise en plus des données vocales usuellement transmises dans un groupe d'appel. Dans la pratique ces données non vocales peuvent correspondre à des sons.

## Revendications

1. Procédé d'émission de données par un dispositif membre d'un premier groupe d'appel, dans lequel ledit dispositif a le rôle d'écouteur dans ledit groupe d'appel, **caractérisé en ce que** :
- le dispositif écouteur change de groupe d'appel pour intégrer un deuxième groupe d'appel dans lequel se trouve au moins un dispositif écouteur pouvant être un dispositif répartiteur auquel le dispositif écouteur souhaite transférer des données, et **en ce que** :
- le dispositif écouteur demande une ressource en émission du deuxième groupe,
- le dispositif écouteur émet les données via la ressource en émission du deuxième groupe,
- le dispositif écouteur émet les données sous forme de trames
- des données vocales sont multiplexées avec des données non vocales à transmettre,
- un premier codec est utilisé pour la transmission des données vocales en faisant croire au réseau qu'un deuxième codec est utilisé, le deuxième codec ayant un débit supérieur au premier codec, une trame selon le deuxième codec comportant plus de bits qu'une trame selon le premier codec,
- la place libérée dans les trames est utilisée pour transmettre des données non vocales,
- le dispositif écouteur réintègre le premier groupe d'appel.

2. Procédé selon la revendication 1, **caractérisé en ce que** chaque trame comporte un identifiant de trame.

3. Procédé selon l'une des revendications 1 ou 2, **caractérisé en ce que** les trames ont une structure correspondant à un codec vocal AMR.

4. Procédé selon l'une des revendications 1 à 3, **caractérisé en ce que** chaque trame comporte un drapeau indiquant aux éléments de l'infrastructure d'un réseau via lesquels les trames transitent que ces trames ne doivent pas être modifiées.

5. Procédé selon l'une des revendications 1 ou 4, **caractérisé en ce qu'**un codec prévoyant des classes de bits, des bits correspondant à un identifiant de trame sont transmis comme des bits d'importance maximale.

## Patentansprüche

1. Verfahren zur Datenübertragung von einem Teilnehmer in einem Gruppenkommunikationsnetzwerk, wobei die Vorrichtung innerhalb dieses Gruppenkommunikationsnetzwerks die Rolle eines Hörers hat, **dadurch gekennzeichnet, dass**:
- die Höreinrichtung das Gruppenkommunikationsnetzwerk wechselt, um ein zweites Gruppenkommunikationsnetzwerk einzubinden, in dem sich mindestens eine Höreinrichtung befindet, die eine Verteilereinrichtung sein kann, an die die Höreinrichtung Daten übertragen möchte, und dadurch, dass:
- die Höreinrichtung eine Sendequelle des zweiten Gruppenkommunikationsnetzwerkes verlangt,
- die Höreinrichtung die Daten über die Sendequelle des zweiten Gruppenkommunikationsnetzwerkes überträgt,
- die Höreinrichtung die Daten in Form von Rahmen überträgt,
- Sprachdaten mit zu übertragenden Nichtsprachdaten gemultiplext werden,
- ein erster Codec für die Übertragung der Sprachdaten verwendet wird und dabei dem Netzwerk gegenüber so tut als würde ein zweiter Codec verwendet, wobei der zweite Codec ein größeres Volumen als der erste Codec hat, ein Rahmen gemäß dem zweiten Codec mehr Bits umfasst als ein Rahmen gemäß dem ersten Codec,
- der in den Rahmen frei gewordene Platz für die Übertragung von Nichtsprachdaten verwendet wird,
- die Höreinrichtung das erste Gruppenkommunikationsnetzwerk wieder einbezieht.

2. Verfahren nach Anspruch 1, **dadurch gekennzeichnet, dass** jeder Rahmen eine Rahmenkennung umfasst.

3. Verfahren nach einem der Ansprüche 1 oder 2, **dadurch gekennzeichnet, dass** die Rahmen eine Struktur wie ein AMR Sprachcodec haben.

4. Verfahren nach einem der Ansprüche 1 bis 3, **dadurch gekennzeichnet, dass** jeder Rahmen eine Kennzeichnung umfasst, die den Infrastrukturelementen eines Netzwerks anzeigt, über welche die Rahmen verlaufen, dass diese Rahmen nicht verändert werden dürfen.

5. Verfahren nach einem der Ansprüche 1 oder 4, **dadurch gekennzeichnet, dass** ein Codec Bitklassen plant, Bits, die einer Rahmenkennung entsprechen als Bits mit höchster Priorität übertragen werden.

## Claims

1. A method of sending data through a member device of a first call group, wherein the said device has the role of an earpiece in the said call group, **characterised in that**:
- the earpiece device changes the call group to integrate a second call group wherein at least one earpiece device is located, able to be a distributor device to which the earpiece device may transfer data, and **in that**:
- the earpiece device requests a sending resource from the second group,
- the earpiece device sends data via the sending resource from the second group,
- the earpiece device sends data in the form of frames,
- voice data is multiplexed with non-voice data to send,
- a first codec is used for the sending of voice data, by leading the network to believe that a second codec is used, the second codec having a higher output than the first codec, a frame according to the second codec including more bits than a frame according to the first codec,
- the space freed in the frames and used to send non-voice data,
- the earpiece device reintegrates the first call group.

2. A method according to the claim 1, **characterised in that** each frame includes a frame login.

3. A method according to one of the claims 1 or 2, **characterised in that** the frames have a structure corresponding to an AMR voice codec.

4. A method according to one of the claims 1 to 3, **characterised in that** each frame includes a flag indicating to the infrastructural information of a network via which the frames route through, that these frames must not be modified.

5. A method according to one of the claims 1 or 4, **characterised in that** with a codec organising bit categories, the bits corresponding to a frame login are sent as bits of greatest importance.
